# EUROPEAN PATENT APPLICATION

(11) **EP 4 654 439 A1**
(43) Date of publication of application: **26.11.2025**
(21) Application number: 24386057.4
(22) Date of filing: 23.05.2024
(51) Int. Cl.: H02K 1/278

(54) **APPARATUS**

(71) Applicant: GKN Aerospace Services Limited, Shirley, Solihull B90 8BG (GB)
(72) Inventor: COPUS, Matthew, Solihull, B90 8BG (GB); MANOLOPOULOS, Charalampos, Solihull, B90 8BG (GB); ZHAO, Chuanli, Solihull, B90 8BG (GB); ALMENDRAL-FERNANDEZ, Gonzalo, Solihull, B90 8BG (GB); CANADELL, Marc, Solihull, B90 8BG (GB)
(74) Representative: D Young & Co LLP

(57) **Abstract**

The present invention relates to a magnet housing for a motor rotor, the housing having an inner edge and an outer edge, the housing comprising: a first housing portion and a second housing portion, wherein the first housing portion and second housing portion are corresponding in shape, the first housing portion and second housing portion are positioned at either end of the magnet housing, the first housing portion and second housing portion are positioned substantially coaxially to one another; and, at least one magnet cavity arranged between the first housing portion and the second housing portion, the at least one magnet cavity arranged to receive at least one magnet, the at least one magnet cavity having an inner opening in the inner edge of the housing and an outer opening in the outer edge of the housing, and wherein the inner opening is larger than the outer opening.

## Description

### Technical Field

The present invention is concerned with magnet arrangements within motor rotors. In modern surface mounted permanent magnet (SPM) rotors, the permanent magnets are retained against centrifugal loading by way of a retaining sleeve wrapped around the outer diameter of the magnets. For large diameter and/or high speed rotors the sleeve thickness required to retain the magnets can become significant. In modern systems, the sleeve then occupies space that may otherwise be reserved for the air gap between the permanent magnets and the stator. An increased electrical air gap results in a reduction of flux density and therefore leads to a reduction in torque. The decrease in torque leads to a decrease in specific power of the motor.

While these drawbacks are disappointing, modern systems do not use overly large or high power levels and therefore modern systems use a sleeve wrapping solution. This is deemed satisfactory enough for the required purposes. Larger motors use thicker sleeves as noted above as this solution has been deemed to date to be sufficiently practical and effective.

In particular, the presently disclosed system may advantageously use cryogenic substances or other cooling fluids to provide improved cooling for the stator. The power levels used in the presently disclosed system are synergistic with the cryogenic aspects discussed herein. The presently disclosed system may use a larger rotor than most modern systems and therefore there are design considerations herein that have not previously been made. As such, the solutions herein are not present in modern systems nor are they considered within the framework of modern systems.

The presently disclosed system may be highly advantageous in aerospace applications however may also be used in any SPM rotor, such as in any vehicles, any machinery or the like.

### Summary of the Invention

Aspects of the invention are set out in the accompanying claims.

In accordance with some embodiments described herein, there is provided a magnet housing for a motor rotor, the housing having an inner edge and an outer edge, the housing comprising: a first housing portion and a second housing portion, wherein the first housing portion and second housing portion are corresponding in shape, the first housing portion and second housing portion are positioned at either end of the magnet housing, the first housing portion and second housing portion are positioned substantially coaxially to one another; and, at least one magnet cavity arranged between the first housing portion and the second housing portion, the at least one magnet cavity arranged to receive at least one magnet, the at least one magnet cavity having an inner opening in the inner edge of the housing and an outer opening in the outer edge of the housing, and wherein the inner opening is larger than the outer opening.

The present housing provides improved magnet retention alongside improved electrical performance of the motor rotor in which the housing may be located. The present arrangement also provides a highly robust construction that in turn requires less maintenance over a set period of time in comparison to modern solutions. This is a significant improvement over modern solutions.

The term corresponding is intended herein to refer to a level of similarity between elements. For example, where one housing portion and another are "corresponding in shape", they are broadly similar in shape. For example, the housing portions may both be broadly circular. Two corresponding housing portions may also be broadly similar in size, orientation or the like. In general, corresponding is used herein to refer to a characteristic that is similar between the corresponding elements. In examples, it may refer to a high level of similarity between the elements, which includes identical shapes, sizes, orientations, etc.

In examples, the magnet housing comprises a plurality of magnet cavities wherein each of the plurality of magnet cavities is arranged to receive at least one magnet.

Allowing the introduction of magnets into the magnet housing allows for a greater amount of rotation when the magnet housing is used in situ in a motor or the like. The greater number of magnets, the greater efficiency the motor may achieve to a point.

In examples, the plurality of magnet cavities are arranged in an array. It is advantageous from a manufacturing and installation standpoint to provide an array of cavities.

In examples, at least a portion of each magnet cavity is adjacent a portion of at least one other magnet cavity. It is advantageous from a manufacturing and installation standpoint to provide cavities at least partially adjacent to one another.

In examples, each magnet cavity is offset from each corresponding adjacent magnet cavity. It is advantageous from a manufacturing and installation standpoint to provide such an offset.

In examples, the inner edge of the housing is a radially inner edge, and the outer edge of the housing is a radially outer edge.

In accordance with some embodiments described herein, there is provided a motor rotor for use in an aircraft, comprising: a magnet housing, the housing comprising: a first housing portion and a second housing portion, wherein the first housing portion and second housing portion are corresponding in shape, the first housing portion and second housing portion are positioned at either end of the magnet housing, the first housing portion and second housing portion are positioned substantially coaxially to one another; and, at least one magnet cavity arranged between the first housing portion and the second housing portion, the at least one magnet cavity arranged to receive at least one magnet, wherein the at least one magnet cavity having an inner opening in the inner edge of the housing and an outer opening in the outer edge of the housing, and the inner opening is larger than the outer opening, and at least one magnet arranged in the at least one magnet cavity, the at least one magnet arranged to have an inner side dimension larger than an outer side dimension; and, a rotor hub located within the magnet housing.

The motor rotor is easy to manufacture and provides a highly efficient electrical performance. The motor rotor does not suffer from losses at a greater size of motor rotor due to the sleeve thickness required (contrary to modern solutions) and the present motor rotor does not require further eddy current mitigation systems. More specifically, at greater centrifugal forces a greater sleeve is required to retain magnets and this leads to lower torque and therefore lower power output. The present motor rotor may be used with further eddy current mitigation systems.

Furthermore, the present disclosure provides a system with a reduced electromagnetic air gap. Specifically, the air gap between the rotor and the stator is reduced in the present system when compared to modern systems. The sleeve in the present system may be smaller than in modern systems.

In examples, the motor rotor comprises a plurality of magnet cavities wherein each of the plurality of magnet cavities is arranged to receive at least one magnet. In examples, the plurality of magnet cavities are arranged in an array. In examples, a portion of each magnet cavity is adjacent a portion of at least one other magnet cavity. In examples, each magnet cavity is offset from each corresponding adjacent magnet cavity.

In examples, the motor rotor is cylindrical, the inner opening of the at least one magnet cavity is a radially inner opening, the outer opening of the at least one magnet cavity is a radially outer opening, the inner side dimension of the at least one magnet is a radially inner side dimension, the outer side dimension of the at least one magnet is a radially outer side dimension, and the rotor hub is located in a radially central location within the magnet housing.

A cylindrical shape housing is advantageous when designing a system to maximise the space available to it and when the housing itself is expected to rotate. Furthermore, the location of a rotor hub centrally inside the housing is advantageous for transmittal of energy from the motor rotor to further elements along e.g. a shaft located centrally in the magnet housing.

In examples, the magnet housing further comprises fluid flow channels for carrying a fluid for cooling the at least one magnet. Cooling advantageously removes undesirable thermal energy which may cause further generation of eddy currents where not removed. As such, cooling increases the overall electrical efficiency of the system.

In examples, the rotor further comprises at least one connecting element arranged to connect the first housing portion and the second housing portion, the connecting element comprising a fluid outlet for releasing fluid for cooling the at least one magnet. Outlets for cooling provide a greater control over the delivery of cooling fluids for use in the system. Cooling advantageously removes undesirable thermal energy which may cause further generation of eddy currents where not removed. As such, cooling increases the overall electrical efficiency of the system.

In examples, the magnet housing is formed of stainless steel or fibre reinforced plastic. These materials are particularly effective at reducing the impact of eddy currents.

In examples, the magnet housing is formed via additive manufacturing. This is particularly advantageous when constructing a relatively complex magnet housing with cavities for magnets and/or channels for fluids.

In examples, the motor rotor further comprises an airflow provider arranged to provide airflow incident onto the magnet housing. Such an airflow provider may be a fan or the like. The airflow may be arranged to be incident into channels for cooling in the magnet housing. Additional airflow leads to additional cooling and therefore provides a more electrically and therefore magnetically effective arrangement.

In accordance with some embodiments described herein, there is provided an aircraft comprising the magnet housing of any of the above embodiments or examples or the motor rotor of any of the above embodiments or examples.

In examples, the aircraft is at least partially electrically powered. While the proposed system is highly effective for high power motors (as may be found in electrically driven vehciles), the system provides advantages in both electrically-propelled and electrical-and-combustion-propelled aircraft.

In accordance with some embodiments described herein, there is provided a method of forming a motor rotor for use in an aircraft comprising: forming at least one magnet with an inner side dimension greater than an outer side dimension; forming a magnet housing according to any of the above embodiments or examples; inserting the at least one magnet into the at least one magnet cavity; arranging the magnet housing and at least one magnet around a rotor hub; and, prestressing the at least one magnet.

The method herein is straightforward in terms of manufacturing and installation and provides a highly robust and electrical efficient arrangement. The magnet is prestressed into the at least one magnet cavity.

In examples, forming at least one magnet cavity arranged between the first housing portion and the second housing portion comprises: forming at least one magnet cavity with a substantially trapezoidal cross section.

As noted above, such magnets are advantageously well held within the magnet housing and are sufficiently effective to overcome the drawbacks associated with the difficulty of manufacturing such magnets.

### Brief Description of the Drawings

One or more embodiments of the invention will now be described, by way of example only, and with reference to the following figures in which:
Figure 1 shows a schematic view of a magnet housing according to examples of the present disclosure;
Figure 2 shows a schematic cross-sectional view of a portion of a magnet housing according to examples of the present disclosure along the axis X-X of Figure 1;
Figure 3a shows a schematic cross-sectional view of a portion of a magnet housing according to examples of the present disclosure along the axis X-X of Figure 1 including a magnet located in a cavity;
Figure 3b and 3c show schematic cross-sectional views of a portion of a magnet housing according to examples of the present disclosure;
Figure 4 shows a schematic view of a magnet housing according to examples of the present disclosure;
Figure 5 shows a schematic view of a magnet housing according to examples of the present disclosure;
Figure 6 shows a schematic view of a motor rotor according to examples of the present disclosure;
Figure 7 shows a flow chart of a method of forming a motor rotor according to examples of the present disclosure;
Figures 8a and 8b show schematic views of magnet subhousings according to examples of the present disclosure; and,
Figure 9 shows a schematic view of a magnet housing according to examples of the present disclosure.

Any reference to prior art documents in this specification is not to be considered an admission that such prior art is widely known or forms part of the common general knowledge in the field. As used in this specification, the words "comprises", "comprising", and similar words, are not to be interpreted in an exclusive or exhaustive sense. In other words, they are intended to mean "including, but not limited to". The invention is further described with reference to the following examples. It will be appreciated that the invention as claimed is not intended to be limited in any way by these examples. It will also be recognised that the invention covers not only individual embodiments but also combination of the embodiments described herein.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the spirit and scope of the claimed invention. Various embodiments of the invention may suitably comprise, consist of, or consist essentially of, appropriate combinations of the disclosed elements, components, features, parts, steps, means, etc, other than those specifically described herein. In addition, this disclosure may include other inventions not presently claimed, but which may be claimed in future.

### Detailed Description

An invention described herein relates to magnet housings for use in motors and/or motor rotors. The housings described herein may be used with any rotors however it is a particularly advantageous arrangement for use with SPM rotors. The SPM rotors may be used in any vehicles or machinery or the like. A particular use for this invention may be in an arrangement wherein cooling substances are available for use for example where cryogenic substances are used for provision of thrust or the like. The present invention is highly advantageous in rotors used in motors of high power levels and those with larger aspect ratios, around 0.25.

The present magnet housing may be used in a motor for an aircraft, and may be specifically used in an electrically drivable motor for an aircraft.

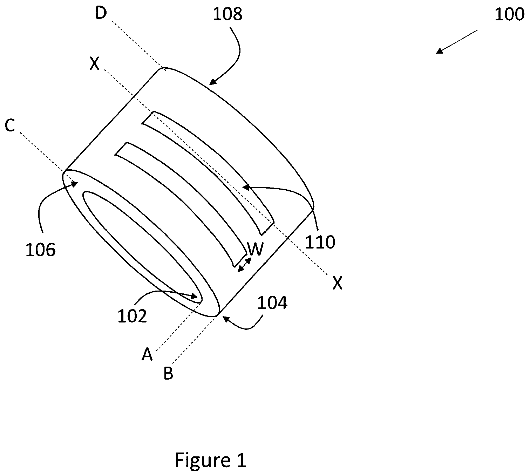

Figure 1 shows a simple schematic view of a magnet housing 100 according to an example of the present disclosure. The magnet housing 100 comprises an inner edge 102 and an outer edge 104. These edges are shown as elements 102 and 104 respectively. To indicate more clearly where the edges are located, illustrative dashed lines A and B are provided for the inner and outer edge respectively.

The magnet housing 100 further comprises a first housing portion 106 and a second housing portion 108. The two portions are part of the same housing 100 as can be seen in Figure 1. As can also be seen in Figure 1, the first housing portion 106 and second housing portion 108 are corresponding in shape 108. The first housing portion 106 and second housing portion 108 are positioned at either end of the magnet housing 100. The first housing portion 106 and second housing portion 108 are shown to be positioned substantially coaxially to one another. This coaxial arrangement has been further illustrate by showing the dashed lines C and D that run along a surface of each portion. These dashed lines are broadly parallel.

The magnet housing 100 further comprises at least one magnet cavity 110 arranged between the first housing portion 106 and the second housing portion 108. The at least one magnet cavity 110 is arranged to receive at least one magnet (not shown in Figure 1). The cavity 110 is suitable to receive at least one magnet.

The at least one magnet cavity 110 has an inner opening (not easily visible) in the inner edge 102 of the housing 100 and an outer opening (not easily visible) in the outer edge 104 of the housing 100. The inner opening is larger than the outer opening.

In the specific example shown, the first housing portion 106 and second housing portion 108 are broadly cylindrical in shape (mirroring the overall cylindrical shape of the housing 100). In the specific example shown, the first housing portion 106 is positioned on the left hand end of the housing 100 and the second housing portion 108 is positioned on the right hand end of the housing 100. The specific example shown has two visible magnet cavities 110. The magnet cavities are shown as curved as per the surface and body of the cylindrical housing 110. An axis X-X is shown by a dashed line through one of the cavities.

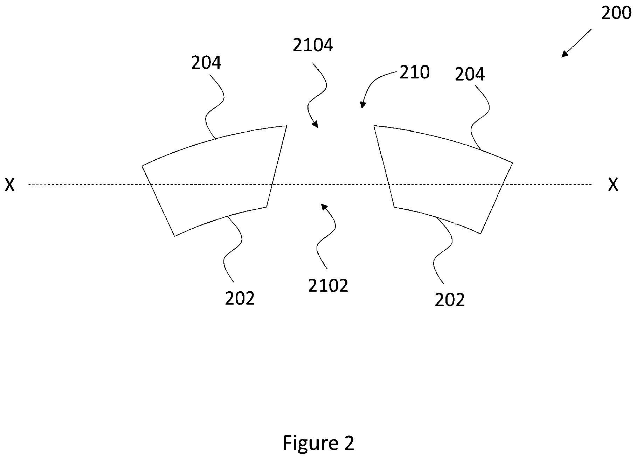

Figure 2 shows a schematic cross-sectional view of a portion 200 of a magnet housing according to examples of the present disclosure along the axis X-X of Figure 1. Specifically, Figure 2 shows a portion 200 of a cross-section along the axis Z-Z shown in Figure 1. The portion 200 of the housing shown in Figure 2 includes two housing sections (which are of the same housing though this cannot be seen in Figure 2 and they appear separate structures) and a cavity located between these two housing sections.

The housing sections have a joint inner edge 202 and a joint outer edge 204. The housing sections include a cavity 210. Numerals used in Figure 2 mirror those from Figure 1 with the numeral increase by 100. Similar numerals are used to represent similar elements (such as inner edge 102 of Figure 1 and inner edge 202 of Figure 2).

The cavity 210 has an inner opening 2102 in the inner edge 202 of the housing and an outer opening 2104 in the outer edge 204 of the housing. The inner opening 2102 is larger than the outer opening 2104. In this way, the cavity may be deemed to be broadly trapezoidal.

The cavity may be of any shape wherein a lower portion of the cavity is wider than an upper portion of the cavity. In this way, when the magnet housing rotates during use, the centrifugal forces cannot move the magnet sufficiently to remove the magnet from the cavity. Noting the outward forces experienced by the magnets during rotation during use, the present arrangement provides a unique solution to stable and reliable location of magnets within the magnet housing. A trapezoidal shape cavity is advantageous for providing a stable and reliable location of magnets without increasing overly the difficulty of manufacturing both the magnet housing and the magnets for use with the housing.

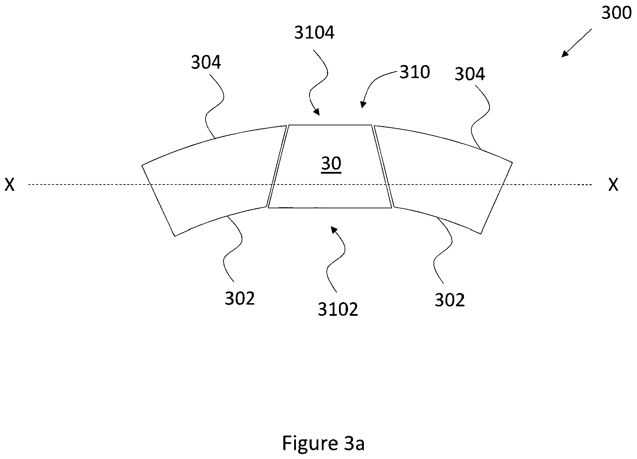

Referring now to Figure 3a, there is shown a schematic cross-sectional view of a portion 300 of a magnet housing according to examples of the present disclosure along the axis X-X of Figure 1 including a magnet 30 located in a cavity 310.

Figure 3a shows a similar example to that of Figure 2. Reference numerals of similar or identical elements are shown increased by 100 from those of Figure 2. For example cavity 210 of Figure 2 is shown as cavity 310 in Figure 3a.

The arrangement shown in Figure 3a shows a portion 300 of a magnet housing with a cavity 310 in which a trapezoidal magnet 30 is located. It can be readily envisaged, with reference to Figure 3a, that when the housing and magnet rotates, the magnet 30 experiences outward forces. The shape of the magnet 30 and the cavity 310 lead to the magnet 30 being securely and robustly located within the housing during both use and non-use. The magnet 30 may be sized such that the magnet 30 is held in place via interference between the sides of the magnet 30 and the sides of the cavity 310. The walls of the cavity may be tapered to provide a secure position into which the magnets can be located and held. The walls may taper together towards the outer edge 304 of the housing 300. In this way the magnet may be forced into place and held in place via an outward force on the magnet 30. This force may be provided by an element contained within the housing 300.

Referring back briefly to Figure 1, a system is disclosed with a series of magnets within a series of cavities. In examples, the plurality of magnet cavities may be arranged in an array. As used herein, "array" implies a series or arrangement. The series or arrangement may be ordered including some form of repetition within the order. Alternatively, the series or arrangement may be unordered and therefore have no regular or repeating pattern within the series or arrangement. Such an order (or lack of order) can be chosen to optimised the magnet arrangement within the housing by machining cavities accordingly within the housing.

The array may be a repeating array wherein a portion of the array is repeated throughout the array. Such a repeating array (inherently an ordered array) may be more straightforward to produce in terms of manufacturing over a random array.

Figure 3a shows a view of an arrangement including a magnet 30. The magnet 30 is shown as a somewhat frustoconical magnet 30 with a flat outer and inner edge and flat sides. The magnets of the present disclosure may take any shape that is congruous with the shape of the motor housing. Indeed, the overall intent of this invention is to securely retain the magnets within the magnet housing during rotational operation. This present disclosure provides secure magnet retention alongside reduced air gap, ease of manufacture and construction.

Indeed, the magnets shown herein may possess particular dimensions that are significantly larger or small than others. In examples, the magnets may have a very small width. In particular, and with reference to Figure 1, the magnets that fit into magnet cavities 110 may have a very small width W (shown by double arrow W). There may be organisation benefits to this arrangement. Indeed, the arrangement may be a single magnet block that has been laminated to provide, in effect, very small width magnets. Any of the examples herein may use laminated magnets.

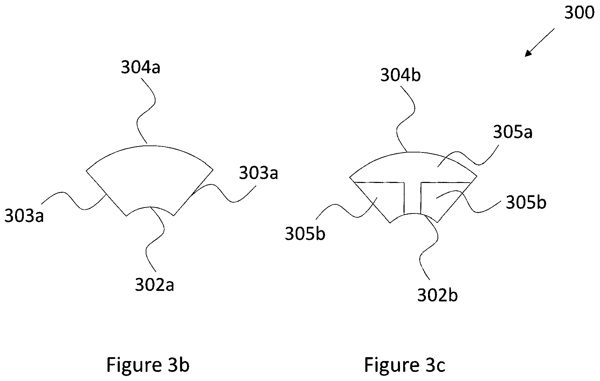

Referring now to Figure 3b, there is shown a portion of the magnet housing 300 from the example shown in Figure 3a. In use, either side 303a would abut a magnet. The magnet housing portion in Figure 3b has an inner edge 302a and an outer edge 304a as per the inner and outer edges 302, 304 of the example shown in Figure 3a. The magnet housing portion may be formed from a single element or from a single material.

Referring now to Figure 3c, there is shown a similar portion of the magnet housing 300 from the example shown in Figure 3b. The magnet housing portion in Figure 3c has an inner edge 302b and an outer edge 304b as per the inner and outer edges 302a, 304b of the example shown in Figure 3b.

The example of Figure 3c in contrast to the example of Figure 3b is formed from a plurality of elements. In particular, the magnet housing portion has a material skeleton 305a against which soft magnetic compound (SMC) may be placed 305b to complete the shape of the magnet housing portion (e.g. shown in Figures 3a and 3b). In a specific example, the magnet housing has a carbon fibre skeleton 305a to which portions of SMC 305b are placed.

The skeleton 305a may be in any suitable shape. In the specific example of Figure 3c, the skeleton 305a is broadly in the form of a T. The bottom of the T extends radially inwardly while the top line of the T is curved as per the rounded magnet housing. The SMC 305b is arranged either side onto the skeleton 305a. The SMC 305b may be bonded to the skeleton 305a. In an example, the SMC 305b is glued to the skeleton 305a. The SMC 305b may be somewhat rounded on the material skeleton 305a.

In use, this arrangement of a magnet housing improves the magnetic flux through the overall housing. More specifically, the magnetic flux is able to pass more readily through the portions of the housing formed by SMC. This is therefore advantageous by providing a means to optimise the flux paths in the motor, by controlling the permeability of material between magnets. This opens up a new flux path as the housing material may not ordinarily be overly magnetically permeable.

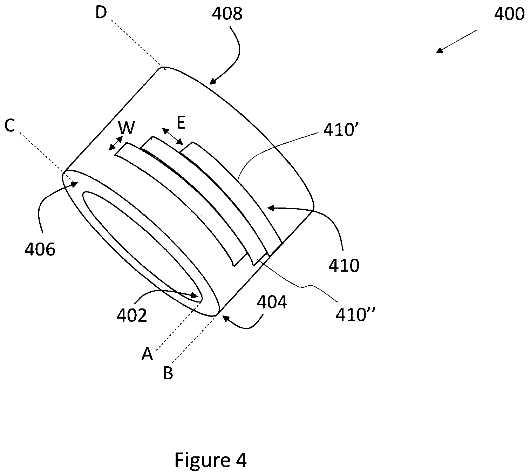

Referring now to Figure 4, there is shown a schematic cross-sectional view of a magnet housing 400 according to examples of the present disclosure. The specific example shown in Figure 4 is similar to the specific example shown in Figure 1. Reference numerals for similar or identical elements in Figure 1 have been increased by 300 in the specific example shown in Figure 4. For expediency, not all elements will be discussed in detail. As an example, housing 400 of Figure 4 has inner edge 402 and outer edge 404 while housing 100 of Figure 1 has inner edge 102 and outer edge 104.

In contrast to the example shown in Figure 1, the example of Figure 4 has a greater number of magnet cavities 410. The specific example of Figure 4 has 3 magnet cavities 410. The magnet cavities 410 share portions that are adjacent. The three cavities have at least some portion that is side-by-side with another portion of another cavity.

Also shown in Figure 4, there is an offset between some of the cavities 410. In particular, the right-most cavity 410' is offset from the middle cavity 410" by a distance E (shown by double arrow). This skew of magnets smooths out the torque during operation of the system. Where magnets are perfectly side-by-side, the motor may experience torque in discreet chunks which is less desirable than a more smooth operation that can be provided by skewed magnets.

While the housings shown so far have been cylindrical, the housing may be of any shape. Where the housing has a rotational symmetry, the offset between the cavities 410 may occur in a theta direction (*Θ*, using notation of cylindrical coordinates). Using cylindrical coordinates notation again, the inner edge can be deemed to be a housing edge at a smaller r distance from the centre than the outer edge. The first housing portion and second housing portion may be located at a different z values along the z axis. These portions may be located at opposite ends of the housing.

In such an arrangement, therefore, the inner edge of the housing is a radially inner edge and the outer edge is a radially outer edge.

The width W of the magnet cavities may be very small (as mentioned above). This may allow for discretised magnets within the magnet housing. In particular, this may lead to a very gentle stepped arrangement (the arrangement in Figure 4 may be seen as a "stepped" arrangement). This may have the advantage of allowing a very gentle "stepped" arrangement which reduces the mechanical difficulty of manufacturing the steps and reduces the mechanical stresses of the step portions during use. In turn, advantages of a very gentle stepped arrangement include improved strength of housing, improved ease of manufacture and therefore improved lifetime and reduced repair cost.

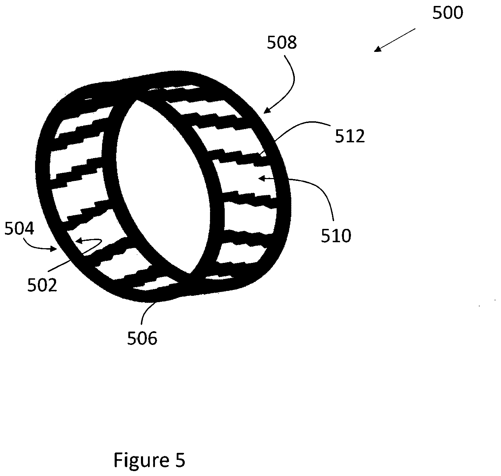

Referring now to Figure 5, there is shown a schematic cross-sectional view of a magnet housing 500 according to examples of the present disclosure. The specific example shown in Figure 5 is similar to the specific example shown in Figure 4. Reference numerals for similar or identical elements in Figure 4 have been increased by 100 in the specific example shown in Figure 5. For expediency, not all elements will be discussed in detail. As an example, housing 500 of Figure 5 has inner edge 502 and outer edge 504 while housing 400 of Figure 4 has inner edge 402 and outer edge 404.

The housing 500 of Figure 5 is a relatively thin housing 500. Thin housings may be advantageous as a thinner housing and larger cavities leads to more space for magnets to be located within the housing 500. As the magnets are the functional aspect of the motor (at least in comparison to the housing), this improves the overall effectiveness of the motor. Furthermore, a thinner housing will be a more lightweight housing. In this way, the overall rotation of the motor will be more efficient by virtue of needing to move less weight in the housing.

The cavities in the specific example of Figure 5 are show as element 510. The cavities 510 in the arrangement of Figure 5 are provided in an array. There is a repeating order of the cavities shown in the specific example of Figure 5. It can be seen that the array contains four stepped cavities that are at least partially adjacent. The cavities are offset from one another in a theta direction. Around each set of four cavities, there is at least one connecting element 512 arranged to connect the first housing portion 506 and the second housing portion 508. The connecting element 512 is stepped in the example of Figure 5 however this is not necessary for the connecting element 512. The housing portions 506, 508 and two connecting elements 512 create a space into which a magnet (or series of magnets) can be inserted and held firm during use. In the example shown, it is envisaged that four magnets would be inserted into the set of four cavities formed between the housing portions 506, 508 and the two connecting elements 512.

The connecting elements 512 may therefore provide an element of support for the magnets alongside providing an improved structural robustness for the housing 500.

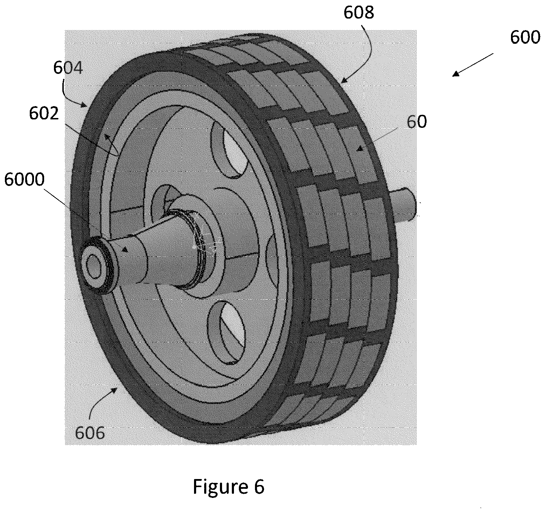

Referring now to Figure 6, there is shown a schematic cross-sectional view of a motor rotor 600 comprising a magnet housing according to examples of the present disclosure. The specific example shown in Figure 6 is similar to the specific example shown in Figure 5. Reference numerals for similar or identical elements in Figure 5 have been increased by 100 in the specific example shown in Figure 6. For expediency, not all elements will be discussed in detail. As an example, magnet rotor 600 of Figure 6 has a housing with inner edge 602 and outer edge 604 while housing 500 of Figure 5 has inner edge 502 and outer edge 504.

The major difference is of course the remaining elements of the motor rotor 600, such as the magnets 60 and the rotor hub 6000. The rotor hub 6000 includes a shaft for transfer of kinetic energy.

The motor rotor 600 may be for use in an aircraft or the like. As mentioned above, this may be used in any vehicle and/or machinery however there are advantageous synergies present during use in aircraft. The rotor 600 has a magnet housing as per earlier examples with magnets 60 arranged in the cavities and a rotor hub 6000 located within the centre of the housing.

The magnets may be arranged or machined to have a trapezoidal cross section, such that the magnets are easily accommodated into the cavities as per Figure 3a. In this way, the at least one magnet may be arranged to have an inner side dimension larger than an outer side dimension. Inner side dimension may be a length towards the inner edge 602 and the outer side dimension may be a length towards the outer edge 604. The area of the inner side of the magnet may be greater than the area of the outer side of the magnet. In this way, the magnet may be loaded into the cavity with some level of pre-stress and then the interference between the magnet and the cavity walls maintains the magnet in place. During rotation of the motor rotor 600, the magnets 60 experience a radially outward force. However, due to the shape of the cavity and the shape of the magnets, the magnets are held in place within the cavity.

As such, the present arrangement is a highly robust arrangement that provides a solution not requiring a sleeve wrapping solution as per modern arrangements. The present system therefore does not suffer the flux density and torque losses associated with such a solution. While manufacturing of the magnets is more involved, this drawback is accounted for by enabling use of very large, very high power motors. Such a solution has not been considered before as sleeve wrapping technology has been, to date, an acceptable solution.

As can be seen in the examples of Figure 6, the motor rotor 600 is cylindrical and the rotor hub 6000 is located in a radially central position within the magnet housing. The housing has an inner edge 602, outer edge 604, a first housing portion 606 and a second housing portion 608.

The arrangements discussed herein are for use in machinery and/or vehicles. As mentioned above, there are advantages to this solution for high power, large diameter motor rotors. Such may be found in (at least partially) electrically powered aircraft. In particular, for arrangements including cryogenic substances (that may be involved in the production of electrical power), there are further advantages that can be provided with further modifications to the arrangement.

In particular, the housing arrangements shown herein may further include fluid channels for transporting fluid. The fluid may be ambient air or the like. The fluid may be oil or a similar coolant. The fluid may be a cryogenic or relatively cold fluid that passes through the housing to provide cooling to e.g. the magnets held within the cavities of the housing. This may be advantageous in maintaining the magnets in a cooled state (which may be supercooled). The fluid channels may be machined into the housing. The magnet housing (which may be referred to as a magnet cage) may have cooling channels integrated into it such that a cooling fluid runs through the housing. This in turn cools the magnets through thermal contact conduction between the magnets and the housing.

In particular, the connecting elements (shown as 512 in the example of Figure 5) may comprise a portion of the fluid channels for providing cooling fluid to magnets. In a specific example, the connecting element 512 may comprise a fluid outlet for releasing fluid for cooling at least one magnet. The fluid outlet may be a spray bar or a spray outlet or the like. The housing may therefore have portions that function as spray bars for spraying fluid (liquid or gas) onto magnets to remove excess heat by forced convention.

The housings discussed herein may be formed of any suitable material. In particular, forming the housing from stainless steel and/or fibre reinforced plastic has been found to be highly advantageous. In particular, reduction of eddy current generation has been observed with materials such as fibre reinforced plastic. This includes materials such as thermosetting carbon fibre composites and similar materials. Materials such as stainless steel, steel and/or aluminium may also be suitable though these may have greater eddy current generation than fibre reinforced plastics. Such materials are more pliable in the manufacturing process of forming the housings discussed herein. Steel, stainless steel and aluminium have increased cooling which may be sufficient to offset the additional eddy current losses. Similarly, the increased power available may outweigh the reduction in power due to increased eddy current losses. Both sets of materials are therefore advantageous in the production of the housings discussed herein.

The housings discussed herein may be formed via additive manufacturing. This provides a great level of control over the formation of the cavities within the housing. As such, due to the slightly complex manufacturing requirements, additive manufacturing is particularly advantageous for the present housings. Furthermore, it is more straightforward to machine fluid channels and outlets (spray bars and the like) into the housing using additive manufacturing.

As used herein "at least partially electrically powered" refers to a system that may be fully electrically powered or electrically powered alongside another power source. In relation to an aircraft, this may be an aircraft that is powered by electrical energy and also via combustion. Such a system may be an aircraft comprising fuel cells for electrical power generation and gas turbines for combustion.

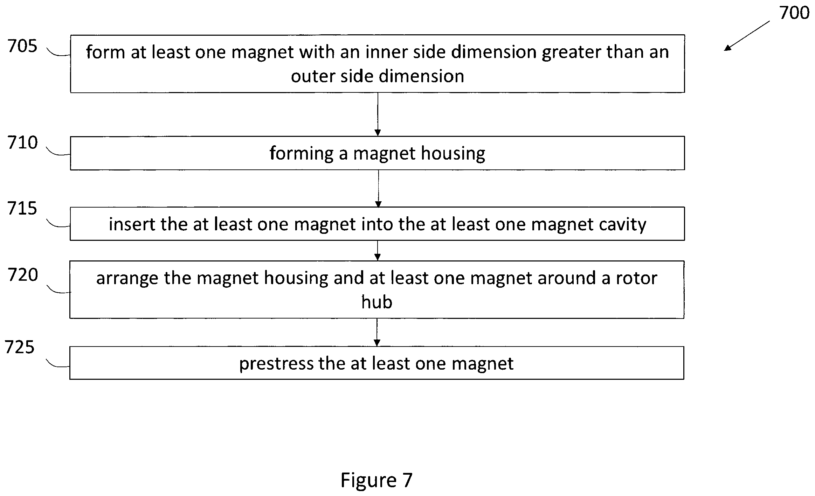

Referring now to Figure 7 there is shown a flow chart of a method 700 of forming a motor rotor according to examples of the present disclosure. The method 700 comprises fives steps 705, 710, 715, 720, 725.

In a first step 705, at least one magnet is formed with an inner side dimension greater than an outer side dimension. As shown above, this has advantageous properties when used in a rotating housing overcoming the difficulty associated with forming non-cuboid shape magnets.

In a second step 710, a magnet housing is formed. The magnet housing may be formed as per any of the above examples.

The magnet is next inserted into a magnet cavity, step 715. A plurality of magnets may be inserted into a plurality of cavities. In the above, examples are provided where there is one magnet for each cavity. This is the simplest arrangement mechanically and therefore is advantageous for reducing manufacturing and assembly complexity. There is however no requirement for this one-to-one relationship between magnets and cavities.

In step 720, the magnet housing and magnet are arranged around a rotor hub (as per that shown in Figure 6). In this way, a motor rotor as per that shown in Figure 6 may be formed. The housing around the rotor hub may be held in place via interference fit, via shrink fitting or the like. The rotor hub may be expandable when in place within the housing. In this way, there is a mechanical stress that is applied to the magnets (step 725).

The motor rotor provides a stability for positioning the magnets and the rotor has no need for sleeve wrapping which as noted above, is extremely advantageous for high diameter and high power rotors.

In a further step 725, the at least one magnet formed in the first step 705 is pre-stressed. This may take the form of mechanical stressing. The mechanical stressing may be provided by the rotor hub within the housing. This stress forces the magnet further into the tapered channels of the cavities. As such, the magnet is in a physically higher energy state than at rest. The magnets are therefore securely located within the cavities and may be spun at very high rotational rates while remaining securely in position.

The pre-stress referred to herein is used in the sense that it is pre operation. That is, pressure is generated in the magnet during manufacture, before operation. Then during operation this pressure is actually relieved somewhat by centrifugal loading of the rotating housing. Enough pre-stress is put into the magnet such that even at full speed, under maximum centrifugal loading, the magnet still maintains contact pressure on to the rotor hub and does not slip. This is highly desirable for efficient operation of the motor rotor.

This assembly is then connected to a shaft. Internally from the magnets in the arrangements disclosed herein may be a rotor iron. This rotor iron may be laminated electrical steel. Such lamination is advantageous in the reduction of eddy currents. This material may also be advantageous as having good permeability for magnetic flux.

This method allows for a robust and secure arrangement such that high electrical powers can safely be used.

In a further arrangement, the housing for the magnets may be formed with a laminated magnet housing. The magnet cage may be formed of, for example, laminated steel.

The present magnet housing may be formed from a number of methods. In particular, the housing may be formed via a series of narrow width housings being formed together (in other language this may be narrow width subhousing being provided and then formed together as a housing). The narrow width subhousings may have a narrow width in the direction shown by double arrow W in Figures 1 and 4. In this way, the magnets may be located within cavities within the narrow subhousings. An advantage of this arrangement is the improved ease of assembly, enablement of alternative magnet shapes, and ease of insertion of magnets into the housing.

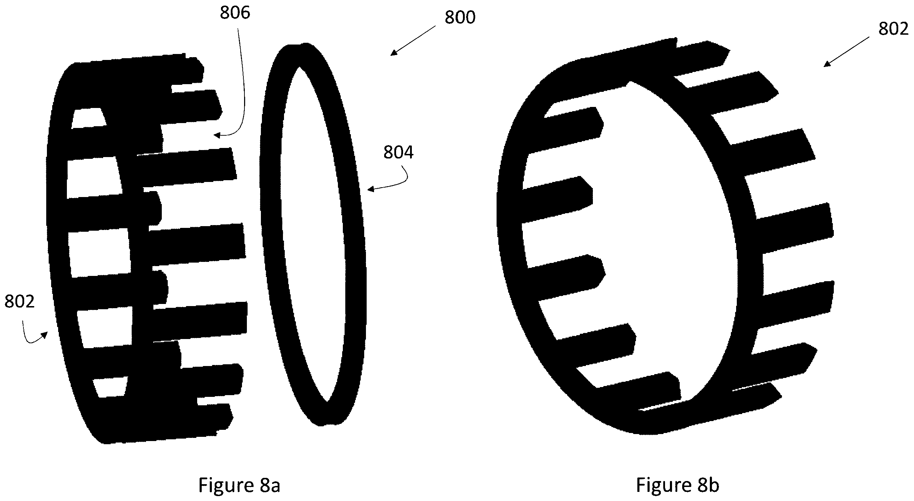

To illustrate this concept, we refer now to Figures 8a and 8b. In particular, in Figure 8a there is shown a magnet housing 800 according to the present disclosure. The arrangement in Figure 8a however is formed from a first subhousing 802 being connected to a second subhousing 804. In the example of Figure 8a, the second subhousing 804 is the rear end of the magnet housing 800. The arrangement may be formed of more than two subhousings, however Figure 8a shows a simplistic arrangement for ease of understanding.

As can be seen, the magnets for use in the cavities 806 of the first subhousing 802 can be inserted sideways (along the z axis, in cylindrical coordinates) rather than merely inserted in a radial direction (along the r axis, in cylindrical coordinates). This also increases the options for, and therefore improves the ease of, manufacture.

Figure 8b shows a single subhousing 802. A magnet housing may be formed of any number of subhousings 802. The magnet cavities may be skewed between the magnet housings by rotating one magnet housing relative to another prior to connecting the magnet housings. The magnet subhousings may be bonded in any reasonable method. This may be via gluing or soldering or the like.

Such an arrangement may include a cover at either end of the magnet housing or on either the inner or outer edge. By covering the outer edge (which may be radially outer edge), the magnets are secured within the magnet housing. This may reduce certain design constraints for otherwise maintaining the magnets in position within the magnet housing. As such, this may improve the ease of manufacture of the magnet housings disclosed herein.

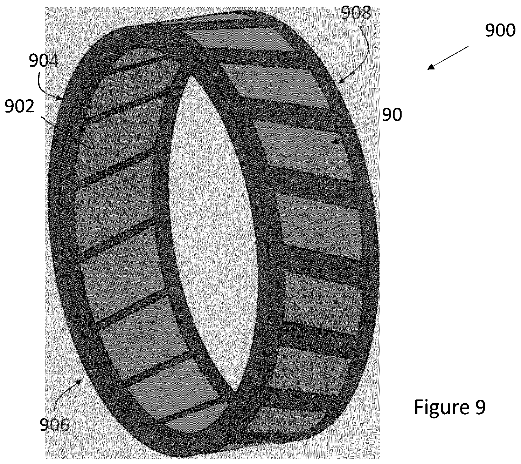

Referring now to Figure 9, there is shown a magnet housing 900 according to examples of the present disclosure. In particular, the housing 900 has a similar structure to the magnet housing shown in the example of Figure 6. The housing 900 of Figure 9 has an inner edge 902, an outer edge 904, first housing portion 906 and a second housing portion 908. The first housing portion 906 and second housing portion 908 correspond in shape. In the example of Figure 9, both are broadly circular. The first housing portion 906 and second housing portion 908 are positioned at either end of the magnet housing 900. In other examples, the first housing portion 906 and second housing portion 908 may not be positioned at either end of the magnet housing 900.

The magnet cavities in the housing 900 are for single magnets 90. The magnets 90 are single magnets (that may be laminated) but that have a skew. The magnets have slanted edges, rather than straight edges. This may be formed from straight edged magnets that have slanted edges ground into the magnets or the like. Other machining techniques than grinding can be used to provide the slanted edges. This provides a more robust housing and an increased ease of construction. The stepped edges in earlier examples may have mechanical weak points in response to the high stress that magnet housings undergo during use at high rotational speeds. The example of Figure 9 has no stepped edges and therefore stress does not impact one point of the housing 900 more greatly than others. In this way, the housing of Figure 9 is more robust and therefore has a greater lifetime.

In any of the above arrangements, there may be included an airflow provider. The airflow provider may be arranged to provide airflow incident onto the magnet housing. Such an airflow provider may be a fan or the like. The airflow may be arranged to be incident into channels for cooling in the magnet housing. Additional airflow leads to additional cooling and therefore provides a more electrically and therefore magnetically effective arrangement. As such, the airflow provider is synergistic in the aim to provide a highly effective magnetic arrangement.

The above disclosure is shown with cylindrical housings however this is not a requirement. Cylindrical housings are often used due to being spatially advantageous and being relatively straightforward to manufacture. The present system provides an improved electrical performance of the motor rotor alongside providing a highly robust construction that in turn requires less maintenance over a set period of time in comparison to modern solutions.

Further examples of feature combinations taught by the present disclosure are set out in the following numbered clauses:
1. A magnet housing for a motor rotor, the housing having an inner edge and an outer edge, the housing comprising:
   a first housing portion and a second housing portion, wherein
      the first housing portion and second housing portion are corresponding in shape,
      the first housing portion and second housing portion are positioned at either end of the magnet housing,
      the first housing portion and second housing portion are positioned substantially coaxially to one another; and,
   at least one magnet cavity arranged between the first housing portion and the second housing portion, the at least one magnet cavity arranged to receive at least one magnet,
      the at least one magnet cavity having an inner opening in the inner edge of the housing and an outer opening in the outer edge of the housing, and
      wherein the inner opening is larger than the outer opening.
2. A magnet housing according to clause 1, comprising a plurality of magnet cavities wherein each of the plurality of magnet cavities is arranged to receive at least one magnet.
3. A magnet housing according to clause 2, wherein the plurality of magnet cavities are arranged in an array.
4. A magnet housing according to clause 2 or 3, wherein at least a portion of each magnet cavity is adjacent a portion of at least one other magnet cavity.
5. A magnet housing according to clause 4, wherein each magnet cavity is offset from each corresponding adjacent magnet cavity.
6. A magnet housing according to any preceding clause, wherein
   the inner edge of the housing is a radially inner edge, and
   the outer edge of the housing is a radially outer edge.
7. A motor rotor for use in an aircraft, comprising:
   a magnet housing, the housing comprising:
   a first housing portion and a second housing portion, wherein
      the first housing portion and second housing portion are corresponding in shape,
      the first housing portion and second housing portion are positioned at either end of the magnet housing,
      the first housing portion and second housing portion are positioned substantially coaxially to one another; and,
   at least one magnet cavity arranged between the first housing portion and the second housing portion, the at least one magnet cavity arranged to receive at least one magnet, wherein
      the at least one magnet cavity having an inner opening in the inner edge of the housing and an outer opening in the outer edge of the housing, and
   the inner opening is larger than the outer opening, and
   at least one magnet arranged in the at least one magnet cavity, the at least one magnet arranged to have an inner side dimension larger than an outer side dimension; and,
   a rotor hub located within the magnet housing.
8. A motor rotor according to clause 7, comprising a plurality of magnet cavities wherein each of the plurality of magnet cavities is arranged to receive at least one magnet.
9. A motor rotor according to clause 8, wherein the plurality of magnet cavities are arranged in an array.
10. A motor rotor according to clause 8 or 9, wherein a portion of each magnet cavity is adjacent a portion of at least one other magnet cavity.
11. A motor rotor according to clause 10, wherein each magnet cavity is offset from each corresponding adjacent magnet cavity.
12. A motor rotor according to any of clauses 7-11, wherein
   the motor rotor is cylindrical,
   the inner opening of the at least one magnet cavity is a radially inner opening,
   the outer opening of the at least one magnet cavity is a radially outer opening,
   the inner side dimension of the at least one magnet is a radially inner side dimension,
   the outer side dimension of the at least one magnet is a radially outer side dimension, and
   the rotor hub is located in a radially central location within the magnet housing.
13. A motor rotor according to any of clauses 7-12, wherein the magnet housing further comprises fluid flow channels for carrying a fluid for cooling the at least one magnet.
14. A motor rotor according to any of clauses 7-13, further comprising at least one connecting element arranged to connect the first housing portion and the second housing portion,
   the connecting element comprising a fluid outlet for releasing fluid for cooling the at least one magnet.
15. A motor rotor according to any of clauses 7-14, wherein the magnet housing is formed of stainless steel or fibre reinforced plastic.
16. A motor rotor according to any of clauses 7-15, wherein the magnet housing is formed via additive manufacturing.
17. A motor rotor according to any of clauses 6-16, further comprising an airflow provider arranged to provide airflow incident onto the magnet housing.
18. An aircraft comprising the magnet housing of clauses 1-6 or the motor rotor of clauses 7-17.
19. An aircraft according to clause 18, wherein the aircraft is at least partially electrically powered.
20. A method of forming a motor rotor for use in an aircraft comprising:
   forming at least one magnet with an inner side dimension greater than an outer side dimension;
   forming a magnet housing according to any of clauses 1-6;
   inserting the at least one magnet into the at least one magnet cavity;
   arranging the magnet housing and at least one magnet around a rotor hub; and,
   prestressing the at least one magnet.
21. A method according to clause 20, wherein forming at least one magnet cavity arranged between the first housing portion and the second housing portion comprises:
   forming at least one magnet cavity with a substantially trapezoidal cross section.

## Claims

1. A magnet housing for a motor rotor, the housing having an inner edge and an outer edge, the housing comprising:
a first housing portion and a second housing portion, wherein
the first housing portion and second housing portion are corresponding in shape,
the first housing portion and second housing portion are positioned at either end of the magnet housing,
the first housing portion and second housing portion are positioned substantially coaxially to one another; and,
at least one magnet cavity arranged between the first housing portion and the second housing portion, the at least one magnet cavity arranged to receive at least one magnet,
the at least one magnet cavity having an inner opening in the inner edge of the housing and an outer opening in the outer edge of the housing, and
wherein the inner opening is larger than the outer opening.

2. A magnet housing according to claim 1, comprising a plurality of magnet cavities wherein each of the plurality of magnet cavities is arranged to receive at least one magnet.

3. A magnet housing according to claim 2, wherein at least a portion of each magnet cavity is adjacent a portion of at least one other magnet cavity.

4. A magnet housing according to claim 3 wherein each magnet cavity is offset from each corresponding adjacent magnet cavity.

5. A magnet housing according to any preceding claim, wherein
the inner edge of the housing is a radially inner edge, and
the outer edge of the housing is a radially outer edge.

6. A motor rotor for use in an aircraft, comprising:
a magnet housing, the housing comprising:
a first housing portion and a second housing portion, wherein
the first housing portion and second housing portion are corresponding in shape,
the first housing portion and second housing portion are positioned at either end of the magnet housing,
the first housing portion and second housing portion are positioned substantially coaxially to one another; and,
at least one magnet cavity arranged between the first housing portion and the second housing portion, the at least one magnet cavity arranged to receive at least one magnet, wherein
the at least one magnet cavity having an inner opening in the inner edge of the housing and an outer opening in the outer edge of the housing, and
the inner opening is larger than the outer opening, and
at least one magnet arranged in the at least one magnet cavity, the at least one magnet arranged to have an inner side dimension larger than an outer side dimension; and,
a rotor hub located within the magnet housing.

7. A motor rotor according to claim 6, comprising a plurality of magnet cavities wherein each of the plurality of magnet cavities is arranged to receive at least one magnet.

8. A motor rotor according to claim 7, wherein the plurality of magnet cavities are arranged in an array.

9. A motor rotor according to claim 7 or 8, wherein a portion of each magnet cavity is adjacent a portion of at least one other magnet cavity.

10. A motor rotor according to any of claims 6-9, wherein
the motor rotor is cylindrical,
the inner opening of the at least one magnet cavity is a radially inner opening,
the outer opening of the at least one magnet cavity is a radially outer opening,
the inner side dimension of the at least one magnet is a radially inner side dimension,
the outer side dimension of the at least one magnet is a radially outer side dimension, and
the rotor hub is located in a radially central location within the magnet housing.

11. A motor rotor according to any of claims 6-10, wherein the magnet housing further comprises fluid flow channels for carrying a fluid for cooling the at least one magnet.

12. A motor rotor according to any of claims 6-11, further comprising an airflow provider arranged to provide airflow incident onto the magnet housing.

13. An aircraft comprising the magnet housing of claims 1-5 or the motor rotor of claims 6-12.

14. A method of forming a motor rotor for use in an aircraft comprising:
forming at least one magnet with an inner side dimension greater than an outer side dimension;
forming a magnet housing according to any of claims 1-5;
inserting the at least one magnet into the at least one magnet cavity;
arranging the magnet housing and at least one magnet around a rotor hub; and,
prestressing the at least one magnet.

15. A method according to claim 14, wherein forming at least one magnet cavity arranged between the first housing portion and the second housing portion comprises:
forming at least one magnet cavity with a substantially trapezoidal cross section.
